# EUROPÄISCHE PATENTANMELDUNG

(11) **EP 4 597 303 A1**
(43) Veröffentlichungstag der Anmeldung: **06.08.2025**
(21) Anmeldenummer: 24155284.3
(22) Anmeldetag: 01.02.2024
(51) Int. Cl.: G06F 8/30

(54) **COMPUTER-IMPLEMENTIERTES VERFAHREN ZUM IDENTIFIZIEREN EINER ERFORDERLICHEN CODE-ÄNDERUNG**

(71) Anmelder: dSPACE GmbH, 33102 Paderborn (DE)
(72) Erfinder: SAUER, Jannis, 33102 Paderborn (DE); Becker, Christian, 33102 Paderborn (DE); Hemion, Nikolas, 33102 Paderborn (DE); Krügel, Dr. Karsten, 33102 Paderborn (DE)

(57) **Zusammenfassung**

Die Erfindung betrifft ein computer-implementiertes Verfahren und System (1) zum Identifizieren zumindest einer zum Erzeugen eines virtuellen Artefaktes (10), insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung (14), mit den Schritten Bereitstellen (S1) zumindest eines Quellcode-Segments (12) zum Testen und/oder Validieren der vorgegebenen Funktion des Kraftfahrzeuges; Anwenden (S2) eines Algorithmus des maschinellen Lernens (A) auf das zumindest eine Quellcode-Segment (12) zum Identifizieren der zumindest einen erforderlichen Code-Änderung (14); und Ausgeben (S3) eines Datensatzes (16) von Informationen der zum Erzeugen des virtuellen Artefaktes (10) zum Testen und/oder Validieren der vorgegebenen Funktion des Kraftfahrzeuges erforderlichen Code-Änderung (14). Ferner betrifft die Erfindung ein computer-implementiertes Verfahren zum Bereitstellen eines Algorithmus des maschinellen Lernens (A).

## Beschreibung

Die vorliegende Erfindung betrifft ein computer-implementiertes Verfahren zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung.

Die vorliegende Erfindung betrifft des Weiteren ein System zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung.

Darüber hinaus betrifft die Erfindung ein virtuelles Artefakt, insbesondere virtuelles Steuergerät, zum Testen und/oder Validieren einer vorgegebenen Funktion, insbesondere einer automatisierten Fahrfunktion, eines Kraftfahrzeuges.

Die Erfindung betrifft des Weiteren ein Computerprogramm mit Programmcode, um das erfindungsgemäße Verfahren durchzuführen sowie einen computerlesbaren Datenträger mit Programmcode eines Computerprogramms, um das erfindungsgemäße Verfahren durchzuführen, wenn das Computerprogramm auf einem Computer ausgeführt wird.

Ferner betrifft die Erfindung ein computer-implementiertes Verfahren zum Bereitstellen eines Algorithmus des maschinellen Lernens, insbesondere eines generativen Deep-Learning-Modells zum Identifizieren zumindest einer erforderlichen Code-Änderung eines Quellcode-Segments zum Testen und/oder Validieren einer vorgegebenen Funktion, insbesondere einer automatisierten Fahrfunktion, eines Kraftfahrzeuges.

### Stand der Technik

Herkömmliche Code-generierende Produkte wie GitHub Copilot, Google Gemini und Amazon Code Whisperer stellen beim Programmieren Vorschläge im AutoVervollständigen-Stil bereit.

Der Nutzer erhält hierbei Vorschläge, wenn dieser Code eingibt oder in natürlicher Sprache beschreibt.

Die vorstehend genannten Code-generierenden Produkte sind jedoch per se nicht auf Workflows ausgerichtet und müssen durch anwendungsfallspezifische Anpassungen für das Erstellen relevanter Ergebnisse erweitert werden.

Bei der Erstellung virtueller Artefakte wie z.B. einem virtuellen Steuergerät zum Testen und/oder Validieren einer vorgegebenen Funktion, insbesondere einer automatisierten Fahrfunktion, eines Kraftfahrzeuges müssen Applikationsingenieure oft aufwändig diverse, d.h. von Projekt zu Projekt hochgradig unterschiedliche Materialien bearbeiten, um an relevante Informationen zu gelangen, die für eine manuelle Erstellung von virtuellen Artefakten verwendet werden kann.

Demzufolge besteht ein Bedarf, bestehende Verfahren zum Erzeugen eines virtuellen Artefaktes dahingehend zu verbessern, dass ein effizienteres Erstellen des virtuellen Artefaktes ermöglicht werden kann.

Es ist daher Aufgabe der Erfindung, ein verbessertes Verfahren zum Erzeugen eines virtuellen Artefaktes vorzusehen, welches ein effizienteres Erstellen des virtuellen Artefaktes begünstigt.

### Offenbarung der Erfindung

Die Aufgabe wird erfindungsgemäß durch ein computer-implementiertes Verfahren zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung mit den Merkmalen des Patentanspruchs 1 gelöst.

Des Weiteren wird die Aufgabe erfindungsgemäß durch ein System zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung mit den Merkmalen des Patentanspruchs 12 gelöst.

Ferner wird die Aufgabe erfindungsgemäß durch ein virtuelles Artefakt, insbesondere ein virtuelles Steuergerät, zum Testen und/oder Validieren einer vorgegebenen Funktion, insbesondere einer automatisierten Fahrfunktion, eines Kraftfahrzeuges mit den Merkmalen des Patentanspruchs 13 gelöst.

Die Aufgabe wird erfindungsgemäß ferner durch ein Computerprogramm mit den Merkmalen des Patentanspruchs 14 sowie einen computerlesbaren Datenträger mit den Merkmalen des Patentanspruchs 15 gelöst.

Darüber hinaus wird die Aufgabe erfindungsgemäß durch ein computer-implementiertes Verfahren zum Bereitstellen eines Algorithmus des maschinellen Lernens, insbesondere eines generativen Deep-Learning-Modells zum Identifizieren zumindest einer erforderlichen Code-Änderung eines Quellcode-Segments zum Testen und/oder Validieren einer vorgegebenen Funktion, insbesondere einer automatisierten Fahrfunktion, eines Kraftfahrzeuges mit den Merkmalen des Patentanspruchs 16 gelöst.

Die Erfindung betrifft ein computer-implementiertes Verfahren zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung.

Das Verfahren umfasst ein Bereitstellen zumindest eines Quellcode-Segments zum Testen und/oder Validieren der vorgegebenen Funktion des Kraftfahrzeuges.

Des Weiteren umfasst das Verfahren ein Anwenden eines Algorithmus des maschinellen Lernens auf das zumindest eine Quellcode-Segment zum Identifizieren der zumindest einen erforderlichen Code-Änderung.

Darüber hinaus umfasst das Verfahren ein Ausgeben eines Datensatzes von Informationen der zum Erzeugen des virtuellen Artefaktes zum Testen und/oder Validieren der vorgegebenen Funktion des Kraftfahrzeuges erforderlichen Code-Änderung.

Die Erfindung betrifft ferner ein System zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung.

Das System umfasst eine Bereitstellungseinheit, welche konfiguriert ist, zumindest ein Quellcode-Segment zum Testen und/oder Validieren der vorgegebenen Funktion bereitzustellen.

Des Weiteren umfasst das System eine Berechnungseinheit, welche konfiguriert ist, einen Algorithmus des maschinellen Lernens auf das zumindest eine Quellcode-Segment zum Identifizieren der zumindest einen erforderlichen Code-Änderung anzuwenden.

Das System umfasst ferner eine Ausgabeeinheit, welche konfiguriert ist, einen Datensatz von Informationen der zum Erzeugen des virtuellen Artefaktes zum Testen und/oder Validieren der vorgegebenen Funktion des Kraftfahrzeuges erforderlichen zumindest einen Code-Änderung auszugeben.

Die Erfindung betrifft überdies ein Computerprogramm mit Programmcode, um das erfindungsgemäße Verfahren zum Identifizieren zumindest einer Code-Änderung durchzuführen, wenn das Computerprogramm auf einem Computer ausgeführt wird sowie einen computerlesbaren Datenträger mit Programmcode eines Computerprogramms, um das erfindungsgemäße Verfahren durchzuführen, wenn das Computerprogramm auf einem Computer ausgeführt wird.

Die Erfindung betrifft des Weiteren ein computer-implementiertes Verfahren zum Bereitstellen eines Algorithmus des maschinellen Lernens, insbesondere eines generativen Deep-Learning-Modells zum Identifizieren zumindest einer erforderlichen Code-Änderung eines Quellcode-Segments zum Testen und/oder Validieren einer vorgegebenen Funktion, insbesondere einer automatisierten Fahrfunktion, eines Kraftfahrzeuges.

Das Verfahren umfasst ein Bereitstellen eines auf Basis natürlichsprachlicher Daten vortrainierten generativen Deep-Learning-Modells, insbesondere eines vortrainierten generativen Transformer-Modells.

Ferner umfasst das Verfahren ein Nachtrainieren des generativen Deep-Learning-Modells unter Verwendung eines Quellcode-Segmente zum Testen und/oder Validieren der vorgegebenen Funktion des Kraftfahrzeuges umfassenden Trainingsdatensatzes.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass sie ursprünglich explizit hierzu programmiert worden ist. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert, im vorliegenden Fall Objekte detektiert werden können.

Ein virtuelles Artefakt stellt im Kontext der vorliegenden Erfindung eine ausführbare Datei dar. Hierbei kann es sich beispielsweise um ein virtuelles Steuergerät, auch V-ECU genannt, handeln, welche z.B. zum Testen und/oder Validieren einer vorgegebenen Funktion, insbesondere einer automatisierten Fahrfunktion, eines Kraftfahrzeuges einsetzbar ist.

Anwendungsfälle für eine V-ECU sind dieselben wie für ein physisches Steuergerät, z.B. um ein HIL-Gerät zu entlasten, also vorzuverlagern, Testkosten zu reduzieren sowie so früh wie möglich im Entwicklungsstadium Tests darauf abfahren zu können.

Zusätzlich zu dem zumindest einen Quellcode-Segment können beispielsweise weitere Sourcecode-Dateien, Beschreibungsdokumente und/oder Definitionsdokumente bereitgestellt werden, welche z.B. Abhängigkeiten verschiedener Sourcecode-Dateien oder Sourcecode-Segmente zueinander beschreiben.

Eine Idee der vorliegenden Erfindung ist es, durch Anwenden eines Algorithmus des maschinellen Lernens auf das zumindest eine Quellcode-Segment eine erforderliche Code-Änderung zu identifizieren und sodann Informationen auszugeben, wie die betreffende Code-Änderung umsetzbar ist.

Nicht immer handelt es sich bei dem zumindest einen Quellcode-Segment um direkt verarbeitbaren Code. Somit muss vorab die Verarbeitbarkeit des Codes überprüft werden.

Der Algorithmus des maschinellen Lernens unterstützt hierbei den Workflow, welcher bisher noch viel Expertenwissen bedarf, indem der Algorithmus Informationen ausgibt, die zur Erstellung des ausführbaren virtuellen Artefakts verwendbar sind.

Bei der Generierung einer V-ECU, die typischerweise aus Code-basierten Artefakten und/oder Objektcode erfolgt, wirkt der Algorithmus des maschinellen Lernens somit unterstützend, da vorhandene einzelne Fragmente der Code-basierten Artefakte und/oder des Objektcodes noch modifiziert werden müssen, um die V-ECU zu erstellen.

Der Algorithmus des maschinellen Lernens übernimmt somit Aufgabenteile, welche bisher von einem Engineering Team bearbeitet wurden, indem der Algorithmus entsprechend Analysen durchführt, wie vorhandene einzelne Fragmente der Code-basierten Artefakte und/oder des Objektcodes zusammenhängen bzw. in Beziehung stehen und wie diese zusammenfügbar sind.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der Datensatz von Informationen der zum Erzeugen des virtuellen Artefaktes zum Testen und/oder Validieren der vorgegebenen Funktion des Kraftfahrzeuges erforderlichen Code-Änderung das zumindest eine Quellcode-Segment referenziert oder umfasst, und wobei das durch den Datensatz referenzierte oder umfasste Quellcode-Segment Annotationen betreffend fehlerhaften Code und/oder der zumindest einen erforderlichen Code-Änderung aufweist.

Das Vorsehen der Annotationen ermöglicht in vorteilhafter Weise eine effiziente Identifizierung relevanter Stellen in dem Quellcode-Segment, die einer Code-Änderung bedürfen.

Gemäß einer weiteren bevorzugten Weiterbildung der Erfindung ist vorgesehen, dass die durch den Datensatz umfassten Informationen der zumindest einen erforderlichen Code-Änderung zumindest eine fehlende Abhängigkeit, insbesondere eine Datei und/oder Funktion, identifizieren.

Fehlende Abhängigkeiten können z.B. fehlende Schnittstellendefinitionen für technische Funktionen der V-ECU sein. Solche Funktionen umfassen z.B. automatisierte Fahrfunktionen oder sonstige Funktionen der V-ECU, wie z.B. ein Betrieb von Blinker, Bremse, ABS, ESP, Infotainmentfunktionen, etc.

Abhängigkeiten können ferner fehlende Dateien, z.B. Typdefinitionen im Code, aber auch fehlende Funktionen sein, die generiert werden sollen.

Der Grund, aus welchem unvollständige Daten vorliegen, kann z.B. darin gegeben sein, dass der Code für die Funktion eines physischen Steuergerätes nicht mit dem Code für eine V-ECU übereinstimmt und somit adaptiert werden muss.

Ein weiterer Anwendungsfall ist die Erstellung einer V-ECU für eine Funktion, für die noch kein physisches Steuergerät existiert. Somit muss der Code für die V-ECU komplett neu aufgesetzt werden.

Der Algorithmus des maschinellen Lernens analysiert somit fehlende Abhängigkeiten und liefert Informationen, wie die betreffenden Abhängigkeiten ergänzt werden können bzw. wie Querbeziehungen zwischen verschiedenen Dateien oder Code-Fragmenten herstellbar sind.

Gemäß einer weiteren bevorzugten Weiterbildung der Erfindung ist vorgesehen, dass die durch den Datensatz umfassten Informationen zumindest eine die fehlende Abhängigkeit behebende Code-Änderung aufweisen, wobei die Code-Änderung eine Generierung zumindest einer zusätzlichen Datei und/oder eine Generierung zumindest einer fehlenden Funktion umfasst.

Somit kann die die fehlende Abhängigkeit durch den Algorithmus des maschinellen Lernens in vorteilhafter Weise ausgeglichen werden.

Gemäß einer weiteren bevorzugten Weiterbildung der Erfindung ist vorgesehen, dass die durch den Datensatz umfassten Informationen der zumindest einen erforderlichen Code-Änderung durch das Quellcode-Segment umfasste redundante Informationen identifizieren.

Oft umfassen Quellcode-Segmente bzw. Quellcode-Dateien zu viele Informationen, die nicht benötigt werden. So muss identifiziert werden, was nicht dazugehört, so dass sich Variablen nicht ungewollt überschreiben bzw. Datentypen im Code doppelt definiert sind.

Der Algorithmus des maschinellen Lernens identifiziert hierbei solche redundanten Informationen und gibt dem Nutzer eine Auswahl, sodass dieser selektieren kann, was gewollt ist und was nicht.

Gemäß einer weiteren bevorzugten Weiterbildung der Erfindung ist vorgesehen, dass die durch den Datensatz umfassten Informationen zumindest eine die durch das Quellcode-Segment umfassten redundanten Informationen behebende Code-Änderung aufweisen, wobei die Code-Änderung ein Entfernen mehrfacher Definitionen, Dateien und/oder Funktionen umfasst.

Somit können die durch das Quellcode-Segment umfassten redundanten Informationen durch den Algorithmus des maschinellen Lernens in vorteilhafter Weise entfernt werden.

Gemäß einer weiteren bevorzugten Weiterbildung der Erfindung ist vorgesehen, dass die durch den Datensatz umfassten Informationen der zumindest einen erforderlichen Code-Änderung durch das Quellcode-Segment umfasste sprachlich inkorrekte semantische und/oder syntaktische Informationen identifizieren.

Wenn der bereitgestellte Code z.B. im Compiler Fehler generiert muss eine Analyse des Codes durchgeführt werden. Hier werden sodann sprachliche oder syntaktische Segmente, die kein Code sind, z.B. Assembler oder Codesegmente in welchen auf eine Hardware zugegriffen wird, die im Rahmen einer V-ECU nicht existiert, durch den Algorithmus des maschinellen Lernens entfernt.

Gemäß einer weiteren bevorzugten Weiterbildung der Erfindung ist vorgesehen, dass die durch den Datensatz umfassten Informationen zumindest eine die durch das Quellcode-Segment umfassten sprachlich inkorrekten semantischen und/oder syntaktischen Informationen behebende Code-Änderung aufweisen, wobei die Code-Änderung ein Entfernen inkorrekter sprachlicher Anteile, insbesondere Assembler Code oder Hardwarezugriffe, und/oder ein Erzeugen von Vorschlägen syntaktisch korrekter Anteile umfasst.

Somit können die durch das Quellcode-Segment umfassten sprachlich inkorrekten semantischen und/oder syntaktischen Informationen durch den Algorithmus des maschinellen Lernens in vorteilhafter Weise entfernt werden.

Gemäß einer weiteren bevorzugten Weiterbildung der Erfindung ist vorgesehen, dass die durch den Datensatz umfassten Informationen der zumindest einen erforderlichen Code-Änderung durch das Quellcode-Segment umfasste fehlende Zykluszeiten-Informationen anhand von symbolischen Bezeichnern und/oder einer Aufrufreihenfolge/-abhängigkeiten identifizieren.

Zur Ausführung des Codes existiert typischerweise ein zyklisch laufender Scheduler, wobei Funktionen in einem vorgegebenen Takt von z.B. 10ms oder manche event-basiert ausgeführt werden. Diese Information ist meist durch den vorhandenen Code nicht umfasst, sondern ist typischerweise in der Beschreibung des Betriebssystems des physischen Steuergerätes enthalten.

Man kann dies jedoch zumindest teilweise anhand des Codes analysieren. Der Algorithmus des maschinellen Lernens analysiert den Code diesbezüglich und stellt Vorschläge bzw. Informationen bereit, wie der Code verarbeitet werden soll.

Gemäß einer weiteren bevorzugten Weiterbildung der Erfindung ist vorgesehen, dass die durch den Datensatz umfassten Informationen zumindest eine die durch das Quellcode-Segment umfassten fehlenden Zykluszeiten-Informationen behebende Code-Änderung aufweisen, wobei die Code-Änderung einen Vorschlag für ein Scheduling von Modulen und/oder Funktionen umfasst.

Somit können die durch das Quellcode-Segment nicht umfassten Zykluszeiten-Informationen durch den Algorithmus des maschinellen Lernens in vorteilhafter Weise ergänzt werden.

Gemäß einer weiteren bevorzugten Weiterbildung der Erfindung ist vorgesehen, dass basierend auf dem Datensatz von Informationen der zum Erzeugen des virtuellen Artefaktes zum Testen und/oder Validieren der vorgegebenen Funktion des Kraftfahrzeuges erforderlichen zumindest einen Code-Änderung ein Erzeugen des virtuellen Artefakts durchgeführt wird.

Somit kann in einem weiteren Schritt das virtuelle Artefakt basierend auf der vorgeschlagenen zumindest einen Code-Änderung erzeugt werden.

Die hierin beschriebenen Merkmale des computerimplementierten Verfahrens zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung sind ebenfalls auf das System zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:

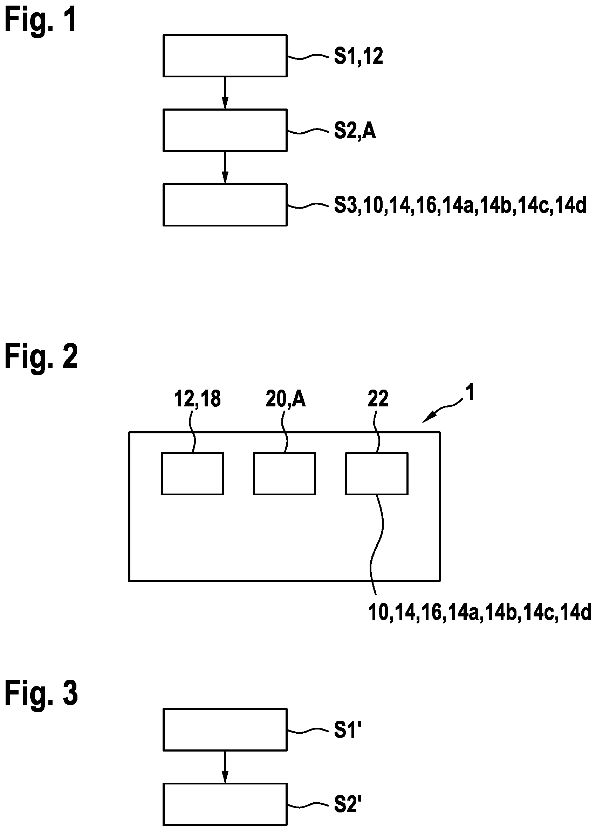

- Fig.1: ein Ablaufdiagramm eines computerimplementierten Verfahrens zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung gemäß einer bevorzugten Ausführungsform der Erfindung;
- Fig.2: eine schematische Darstellung eines Systems zum Identifizieren zumindest einer zum Erzeugen eines virtuellen Artefaktes, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung gemäß der bevorzugten Ausführungsform der Erfindung; und
- Fig.3: ein Ablaufdiagramm eines computerimplementierten Verfahrens zum Bereitstellen eines Algorithmus des maschinellen Lernens, insbesondere eines generativen Deep-Learning-Modells zum Identifizieren zumindest einer erforderlichen Code-Änderung eines Quellcode-Segments zum Testen und/oder Validieren einer vorgegebenen Funktion, insbesondere einer automatisierten Fahrfunktion, eines Kraftfahrzeuges gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

Das ist Fig.1 gezeigte computer-implementierte Verfahren zum Identifizieren zumindest einer zum Erzeugen eines virtuellen Artefaktes 10, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung 14 umfasst ein Bereitstellen S1 zumindest eines Quellcode-Segments 12 zum Testen und/oder Validieren der vorgegebenen Funktion des Kraftfahrzeuges.

Des Weiteren umfasst das Verfahren ein Anwenden S2 eines Algorithmus des maschinellen Lernens A auf das zumindest eine Quellcode-Segment 12 zum Identifizieren der zumindest einen erforderlichen Code-Änderung 14.

Das Verfahren umfasst ferner ein Ausgeben S3 eines Datensatzes 16 von Informationen der zum Erzeugen des virtuellen Artefaktes 10 zum Testen und/oder Validieren der vorgegebenen Funktion des Kraftfahrzeuges erforderlichen Code-Änderung 14.

Der Datensatz 16 von Informationen der zum Erzeugen des virtuellen Artefaktes 10 zum Testen und/oder Validieren der vorgegebenen Funktion des Kraftfahrzeuges erforderlichen Code-Änderung 14 umfasst ein Referenzieren zumindest eines Quellcode-Segments 12. Das durch den Datensatz 16 referenzierte oder umfasste Quellcode-Segment 12 weist ferner Annotationen betreffend fehlerhaften Code und/oder der zumindest einen erforderlichen Code-Änderung 14 auf.

Die durch den Datensatz 16 umfassten Informationen der zumindest einen erforderlichen Code-Änderung 14 identifizieren hierbei zumindest eine fehlende Abhängigkeit 14a, insbesondere eine Datei und/oder Funktion.

Die durch den Datensatz 16 umfassten Informationen weisen ferner eine die fehlende Abhängigkeit 14a behebende Code-Änderung 14 auf. Die Code-Änderung 14 umfasst dabei eine Generierung zumindest einer zusätzlichen Datei und/oder eine Generierung zumindest einer fehlenden Funktion.

Die durch den Datensatz 16 umfassten Informationen der zumindest einen erforderlichen Code-Änderung 14 identifizieren des Weiteren durch das Quellcode-Segment 12 umfasste redundante Informationen 14b.

Ferner weisen die durch den Datensatz 16 umfassten Informationen zumindest eine die durch das Quellcode-Segment 12 umfassten redundanten Informationen 14b behebende Code-Änderung 14 auf. Die Code-Änderung 14 umfasst dabei ein Entfernen mehrfacher Definitionen, Dateien und/oder Funktionen.

Die durch den Datensatz 16 umfassten Informationen der zumindest einen erforderlichen Code-Änderung 14 identifizieren des Weiteren durch das Quellcode-Segment 12 umfasste sprachlich inkorrekte semantische und/oder syntaktische Informationen 14c.

Überdies weisen die durch den Datensatz 16 umfassten Informationen zumindest eine die durch das Quellcode-Segment 12 umfassten sprachlich inkorrekten semantischen und/oder syntaktischen Informationen 14c behebende Code-Änderung 14 auf. Die Code-Änderung 14 umfasst dabei ein Entfernen inkorrekter sprachlicher Anteile, insbesondere Assembler Code oder Hardwarezugriffe, und/oder ein Erzeugen von Vorschlägen syntaktisch korrekter Anteile.

Die durch den Datensatz 16 umfassten Informationen der zumindest einen erforderlichen Code-Änderung 14 identifizieren durch das Quellcode-Segment 12 umfasste fehlende Zykluszeiten-Informationen 14d anhand von symbolischen Bezeichnern und/oder einer Aufrufreihenfolge/-abhängigkeiten.

Ferner weisen die durch den Datensatz 16 umfassten Informationen zumindest eine die durch das Quellcode-Segment 12 umfassten fehlenden Zykluszeiten-Informationen 14d behebende Code-Änderung 14 auf. Die Code-Änderung 14 umfasst dabei einen Vorschlag für ein Scheduling von Modulen und/oder Funktionen.

Basierend auf dem Datensatz 16 von Informationen der zum Erzeugen des virtuellen Artefaktes 10 zum Testen und/oder Validieren der vorgegebenen Funktion des Kraftfahrzeuges erforderlichen zumindest einen Code-Änderung 14 wird überdies ein Erzeugen des virtuellen Artefakts 10 durchgeführt.

Fig.2 zeigt eine schematische Darstellung eines Systems 1 zum Identifizieren zumindest einer zum Erzeugen eines virtuellen Artefaktes 10, insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung 14 gemäß der bevorzugten Ausführungsform der Erfindung.

Das System 1 umfasst eine Bereitstellungseinheit 18, welche konfiguriert ist, zumindest ein Quellcode-Segment 12 zum Testen und/oder Validieren der vorgegebenen Funktion bereitzustellen.

Des Weiteren umfasst das System 1 eine Berechnungseinheit 20, welche konfiguriert ist, einen Algorithmus des maschinellen Lernens A auf das zumindest eine Quellcode-Segment 12 zum Identifizieren der zumindest einen erforderlichen Code-Änderung 14 anzuwenden.

Das System 1 umfasst darüber hinaus eine Ausgabeeinheit 22, welche konfiguriert ist, einen Datensatz 16 von Informationen der zum Erzeugen des virtuellen Artefaktes 10 zum Testen und/oder Validieren der vorgegebenen Funktion des Kraftfahrzeuges erforderlichen zumindest einen Code-Änderung 14 auszugeben.

Fig.3 zeigt ein Ablaufdiagramm eines computerimplementierten Verfahrens zum Bereitstellen eines Algorithmus des maschinellen Lernens A, insbesondere eines generativen Deep-Learning-Modells zum Identifizieren zumindest einer erforderlichen Code-Änderung 14 eines Quellcode-Segments 12 zum Testen und/oder Validieren einer vorgegebenen Funktion, insbesondere einer automatisierten Fahrfunktion, eines Kraftfahrzeuges gemäß der bevorzugten Ausführungsform der Erfindung.

Das Verfahren umfasst ein Bereitstellen S1' eines auf Basis natürlichsprachlicher Daten vortrainierten generativen Deep-Learning-Modells, insbesondere eines vortrainierten generativen Transformer-Modells.

Darüber hinaus umfasst das Verfahren ein Nachtrainieren S2` des generativen Deep-Learning-Modells unter Verwendung eines Quellcode-Segmente zum Testen und/oder Validieren der vorgegebenen Funktion des Kraftfahrzeuges umfassenden Trainingsdatensatzes.

Es kann somit ein auf einem großen Datensatz vortrainiertes generatives Deep-Learning-Modell verwendet werden, welches in der Lage ist, Code zum Erzeugen virtueller Artefakte zu verarbeiten.

Das Nachtrainieren des generativen Deep-Learning-Modells erfolgt in vorteilhafter Weise unter Verwendung eines in Relation zu den initialen Trainingsdaten zum Trainieren des generativen Deep-Learning-Modells vergleichsweise kleinen Datensatzes von Code zum Erzeugen virtueller Artefakte.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Die erfindungsgemäßen Verfahren können ferner zumindest abschnittsweise sequentiell oder parallel durchgeführt werden.

### Bezugszeichenliste

- 1: System
- 10: virtuelles Artefakt
- 12: Quellcode-Segment
- 14: Code-Änderung
- 14a: fehlende Abhängigkeit
- 14b: redundante Informationen
- 14c: inkorrekte semantische und/oder syntaktische Informationen
- 14d: Zykluszeiten-Informationen
- 16: Datensatz
- 18: Bereitstellungseinheit
- 20: Berechnungseinheit
- 22: Ausgabeeinheit
- A: Algorithmus des maschinellen Lernens
- S1-S3: Verfahrensschritte
- S1`-S2`: Verfahrensschritte

## Patentansprüche

1. Computer-implementiertes Verfahren zum Identifizieren zumindest einer zum Erzeugen eines virtuellen Artefaktes (10), insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung (14), mit den Schritten:
Bereitstellen (S1) zumindest eines Quellcode-Segments (12) zum Testen und/oder Validieren der vorgegebenen Funktion des Kraftfahrzeuges;
Anwenden (S2) eines Algorithmus des maschinellen Lernens (A) auf das zumindest eine Quellcode-Segment (12) zum Identifizieren der zumindest einen erforderlichen Code-Änderung (14); und
Ausgeben (S3) eines Datensatzes (16) von Informationen der zum Erzeugen des virtuellen Artefaktes (10) zum Testen und/oder Validieren der vorgegebenen Funktion des Kraftfahrzeuges erforderlichen Code-Änderung (14).

2. Computer-implementiertes Verfahren nach Anspruch 1, wobei der Datensatz (16) von Informationen der zum Erzeugen des virtuellen Artefaktes (10) zum Testen und/oder Validieren der vorgegebenen Funktion des Kraftfahrzeuges erforderlichen Code-Änderung (14) das zumindest eine Quellcode-Segment (12) referenziert oder umfasst, und wobei das durch den Datensatz (16) referenzierte oder umfasste Quellcode-Segment (12) Annotationen betreffend fehlerhaften Code und/oder der zumindest einen erforderlichen Code-Änderung (14) aufweist.

3. Computer-implementiertes Verfahren nach einem der vorhergehenden Ansprüche, wobei die durch den Datensatz (16) umfassten Informationen der zumindest einen erforderlichen Code-Änderung (14) zumindest eine fehlende Abhängigkeit (14a), insbesondere eine Datei und/oder Funktion, identifizieren.

4. Computer-implementiertes Verfahren nach Anspruch 3, wobei die durch den Datensatz (16) umfassten Informationen zumindest eine die fehlende Abhängigkeit (14a) behebende Code-Änderung (14) aufweisen, wobei die Code-Änderung (14) eine Generierung zumindest einer zusätzlichen Datei und/oder eine Generierung zumindest einer fehlenden Funktion umfasst.

5. Computer-implementiertes Verfahren nach einem der vorhergehenden Ansprüche, wobei die durch den Datensatz (16) umfassten Informationen der zumindest einen erforderlichen Code-Änderung (14) durch das Quellcode-Segment (12) umfasste redundante Informationen (14b) identifizieren.

6. Computer-implementiertes Verfahren nach Anspruch 5, wobei die durch den Datensatz (16) umfassten Informationen zumindest eine die durch das Quellcode-Segment (12) umfassten redundanten Informationen (14b) behebende Code-Änderung (14) aufweisen, wobei die Code-Änderung (14) ein Entfernen mehrfacher Definitionen, Dateien und/oder Funktionen umfasst.

7. Computer-implementiertes Verfahren nach einem der vorhergehenden Ansprüche, wobei die durch den Datensatz (16) umfassten Informationen der zumindest einen erforderlichen Code-Änderung (14) durch das Quellcode-Segment (12) umfasste sprachlich inkorrekte semantische und/oder syntaktische Informationen (14c) identifizieren.

8. Computer-implementiertes Verfahren nach Anspruch 7, wobei die durch den Datensatz (16) umfassten Informationen zumindest eine die durch das Quellcode-Segment (12) umfassten sprachlich inkorrekten semantischen und/oder syntaktischen Informationen (14c) behebende Code-Änderung (14) aufweisen, wobei die Code-Änderung (14) ein Entfernen inkorrekter sprachlicher Anteile, insbesondere Assembler Code oder Hardwarezugriffe, und/oder ein Erzeugen von Vorschlägen syntaktisch korrekter Anteile umfasst.

9. Computer-implementiertes Verfahren nach einem der vorhergehenden Ansprüche, wobei die durch den Datensatz (16) umfassten Informationen der zumindest einen erforderlichen Code-Änderung (14) durch das Quellcode-Segment (12) umfasste fehlende Zykluszeiten-Informationen (14d) anhand von symbolischen Bezeichnern und/oder einer Aufrufreihenfolge/-abhängigkeiten (14a) identifizieren.

10. Computer-implementiertes Verfahren nach Anspruch 9, wobei die durch den Datensatz (16) umfassten Informationen zumindest eine die durch das Quellcode-Segment (12) umfassten fehlenden Zykluszeiten-Informationen (14d) behebende Code-Änderung (14) aufweisen, wobei die Code-Änderung (14) einen Vorschlag für ein Scheduling von Modulen und/oder Funktionen umfasst.

11. Computer-implementiertes Verfahren nach einem der vorhergehenden Ansprüche, wobei basierend auf dem Datensatz (16) von Informationen der zum Erzeugen des virtuellen Artefaktes (10) zum Testen und/oder Validieren der vorgegebenen Funktion des Kraftfahrzeuges erforderlichen zumindest einen Code-Änderung (14) ein Erzeugen des virtuellen Artefakts (10) durchgeführt wird.

12. System (1) zum Identifizieren zumindest einer zum Erzeugen eines virtuellen Artefaktes (10), insbesondere eines virtuellen Steuergerätes, zum Testen und/oder Validieren einer vorgegebenen Funktion, insbesondere einer automatisierten Fahrfunktion, eines Kraftfahrzeuges, erforderlichen Code-Änderung (14), umfassend:
eine Bereitstellungseinheit (18), welche konfiguriert ist, zumindest ein Quellcode-Segment (12) zum Testen und/oder Validieren der vorgegebenen Funktion bereitzustellen;
eine Berechnungseinheit (20), welche konfiguriert ist, einen Algorithmus des maschinellen Lernens (A) auf das zumindest eine Quellcode-Segment (12) zum Identifizieren der zumindest einen erforderlichen Code-Änderung (14) anzuwenden; und
eine Ausgabeeinheit (22), welche konfiguriert ist,
einen Datensatz (16) von Informationen der zum Erzeugen des virtuellen Artefaktes (10) zum Testen und/oder Validieren der vorgegebenen Funktion des Kraftfahrzeuges erforderlichen zumindest einen Code-Änderung (14) auszugeben.

13. Virtuelles Artefakt (10), insbesondere virtuelles Steuergerät, zum Testen und/oder Validieren einer vorgegebenen Funktion, insbesondere einer automatisierten Fahrfunktion, eines Kraftfahrzeuges, erzeugt unter Verwendung eines Verfahrens nach einem der Ansprüche 1 bis 11.

14. Computerprogrammprodukt mit einem Computerprogramm, das Softwaremittel zur Durchführung eines Verfahrens nach einem der Ansprüche 1 bis 11 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 11 auszuführen, wenn das Computerprogramm auf einem Computer ausgeführt wird.

16. Computer-implementiertes Verfahren zum Bereitstellen eines Algorithmus des maschinellen Lernens (A), insbesondere eines generativen Deep-Learning-Modells zum Identifizieren zumindest einer erforderlichen Code-Änderung (14) eines Quellcode-Segments (12) zum Testen und/oder Validieren einer vorgegebenen Funktion, insbesondere einer automatisierten Fahrfunktion, eines Kraftfahrzeuges, mit den Schritten:
Bereitstellen (S1') eines auf Basis natürlichsprachlicher Daten vortrainierten generativen Deep-Learning-Modells, insbesondere eines vortrainierten generativen Transformer-Modells; und
Nachtrainieren (S2') des generativen Deep-Learning-Modells unter Verwendung eines Quellcode-Segmente zum Testen und/oder Validieren der vorgegebenen Funktion des Kraftfahrzeuges umfassenden Trainingsdatensatzes.
